Europäisches Patentamt

European Patent Office

Office européen des brevets

(19)

(11) Publication number: **0 359 592**
A2

(12) **EUROPEAN PATENT APPLICATION**

(21) Application number: 89309747.7

(22) Date of filing: 08.09.89

(51) Int. Cl.5: **B 01 D 17/025**
E 03 F 5/16, C 02 F 1/40

(30) Priority: 12.09.88 GB 8821292

(43) Date of publication of application:
21.03.90 Bulletin 90/12

(84) Designated Contracting States:
AT BE CH DE ES FR GB GR IT LI LU NL SE

(71) Applicant: The Secretary of State for the Environment in
Her Britannic Majesty's Government of the United
Kingdom of Great Britain
and Northern Ireland 2 Marsham Street
London SW1P 3EB (GB)

(72) Inventor: Osborne, Andrew John
70 Buschey Way
Beckenham Kent BR3 2TD (GB)

(74) Representative: Beckham, Robert William et al
Ministry of Defence Procurement Executive Patents 1A(4)
Room 2014 Empress State Building Lillie Road
London SW6 1TR (GB)

(54) Oil separator.

(57) An oil separator for use in water drainage systems has an
inlet (10) leading to an inlet chamber (12) which has an opening
to a seaparation chamber (14) and a bypass weir(15) leading to
a bypass (16). The separation chamber (14) is connected by a
throttle system (17) to an outlet chamber (19). In use water
rises from a datum level to a level controlled by the throttle
system and by the rate of flow. If the rate of flow and duration of
flow are such that water in the inlet chamber rises above a
predetermined level excess flow passes over the bypass weir
directly to the bypass.

EP 0 359 592 A2

**Description**

# OIL SEPARATOR

The present invention relates to oil separators for use in water drainage systems.

There are many situations where spillage of oil or oil-derived substances are likely or inevitable. An example of such a situation is the refuelling of aircraft, and to a lesser extent of other vehicles. Such spillage can be washed into a local water drainage system as a result of precipitation.

Water drainage systems frequently lead, eventually, to a water supply, and even a minute percentage of oil, although it is practically insoluable in water, can render drinking water unpalatable. Also the presence of oil can be detrimental to the efficient operation of sewage treatment plants. It is therefore desirable that oil be separated from surface water at some suitable point close to likely areas of spillage.

A known type of separator commonly used at, for example, airfields is known as the API separator. Such a separator consists, in essence, of a large tank through which the substantive flowrate is such that the oil separates out to the surface of the water, where it is retained by a baffle, to be subsequently decanted for disposal. The level of liquid in this type of separator remains substantially constant at all times. Design of this type of separator is dependent on a large number of factors such as, for example, density and size of globule of oil to be separated, the size of the catchment area and the intensity of rainfall which might be expected. Clearly it would, in larger catchment installations, be impracticable to have a separator with a separation chamber large enough to cope with the worst conditions of precipitation, and the usual arrangement allows for bypass of flow above a certain "design flow" limit.

Frequently a throttle is fitted at the upstream end of an API separator in order to control the rate of flow through the separation chamber and to effect bypassing of excess flow.

Patent GB 1525606 points out that in excessive flow conditions, even with a bypass arrangement, the unbypassed flow rate through the separator will rise, and may result in disturbance and re-entrainment of separated contaminants. This patent describes a number of throttle arrangements which limit the rise in flow rate through the separator in excessive flow conditions.

Inevitably separators of this type are large, and are therefore expensive both in terms of capital cost and of ground usage. Additional cost is, of course, also occasioned by the necessity for safety precautions due to the presence of a flooded underground chamber. The extra expense might involve covering of the separator, or the use of extra land area and barrier fences.

Another problem with conventional separators arises from the fact that the level of liquid remains substantially constant at all times. This means that when an excessive flow rate is achieved almost instantly at the start of flow, as can occur in thunderstorm conditions, flow will be bypassed almost immediately. As a high proportion of surface contaminants, especially those containing oil, is removed in the early stages of rainfall this will result in escape of undesireably large quantities of contaminant.

There is, therefore, a requirement for an oil separator which will equal or better the efficiency of known separators but which will be less expensive both in terms of capital cost and of land usage.

According to the present invention an oil separator, for use in a water drainage system, has an inlet leading to an inlet chamber which leads to a separation chamber and in which there is also a bypass weir, the separation chamber being connected by a throttle system to an outlet chamber from which there is an outlet, the throttle system intaking water from below a datum water level such that, in use, when water is flowing through the separator the water level rises to a level determined by the throttle system and by the rate of flow and such that should the rate and duration of flow cause the water to rise above a predetermined level excess inflow to the inlet chamber can pass over the bypass weir directly to a bypass. There is preferably a baffle positioned between the inlet and separation chambers.

Also there is preferably a plenum chamber included in the throttle system between a throttle device and the outlet chamber.

In such a separator the level of liquid in the separation chamber when there is flow therethrough will rise due to the effect of the throttle system allowing full use to be made of the available head. As the level rises the head will increase and the flow through the throttle system will also increase. However, should the flowrate be so great and the duration of flow so long that the level in the separation chamber, and hence in the inlet chamber, rises to the level of the bypass weir in the inlet chamber, excess flow will then be diverted to bypass the separation chamber. By this time most, if not all, contaminating oil will have been washed off the drainage area by the earlier stages of the causatory rainfall, and there should therefore be minimal oil-based pollutant left in the drainage water by the time the bypass comes into operation.

It will be realised that all separators according to the present invention can make full use of the available difference in level between the inlet pipe and outlet pipe and can operate on zero level difference, thus allowing application to existing drainage where there is no difference in level available.

With all oil separators of the API type the outlet must be lower than the inlet, with the top of the outlet preferably no higher than the bottom of the inlet.

The bypass may consist of a pipeline which passes directly from the inlet chamber to the outlet chamber.

The separator preferably includes means whereby the separation chamber can be completely sealed off from the outlet to allow any large spillage of oil to collect and be removed therefrom without danger of escaping into the outlet system. The oil may be removed by, for example, an oil mop or similar device which is preferably operated by automatic means which may be either continuous or intermittently operated by timer or by manual control. The oil is preferably transferred automatically to an oil storage tank, which should preferably contain means for automatically returning to the separation chamber any water which is carried with the oil to the storage tank. The separator may advantageously contain means for giving warning of imminent filling of the storage tank or of any unusual build up of oil levels in the separation chamber which might be expected to have been caused by a major oil spillage or a breakdown of the oil removal device. The oil level warning system might, for example, be based on the detection of the oil/water interface should it extend below a predetermined level.

A preferred form of throttle device includes a cylinder extending substantially the width of the downstream end of the chamber and having perforations which are preferably directed downwards, one end being closed and the other leading into a plenum chamber, the perforations preferably being spaced so as to ensure that water flow through the separation chamber remains substantially uniform across its width.

The size of the orifices in the cylinder should be such that the flow rate in the separation chamber does not exceed the maximum acceptable for efficient oil separation. In order to regulate the water level in the plenum chamber, and hence the head across the throttle device, outflow from, and water level in, the plenum chamber are preferably controlled by a simple orifice and weir.

Embodiments of the invention will now be described, by way of example only, with reference to the accompanying diagrammatic drawings, of which

Fig 1 is a plan view, partly in section, of a separator according to the invention,

Fig 2 is an elevation in section along line A-A of Fig 1,

Fig 3 is an end view in section along line B-B of Figure 1 of a detail of a throttle device,

Fig 4 is a detail view of an alternative throttle system.

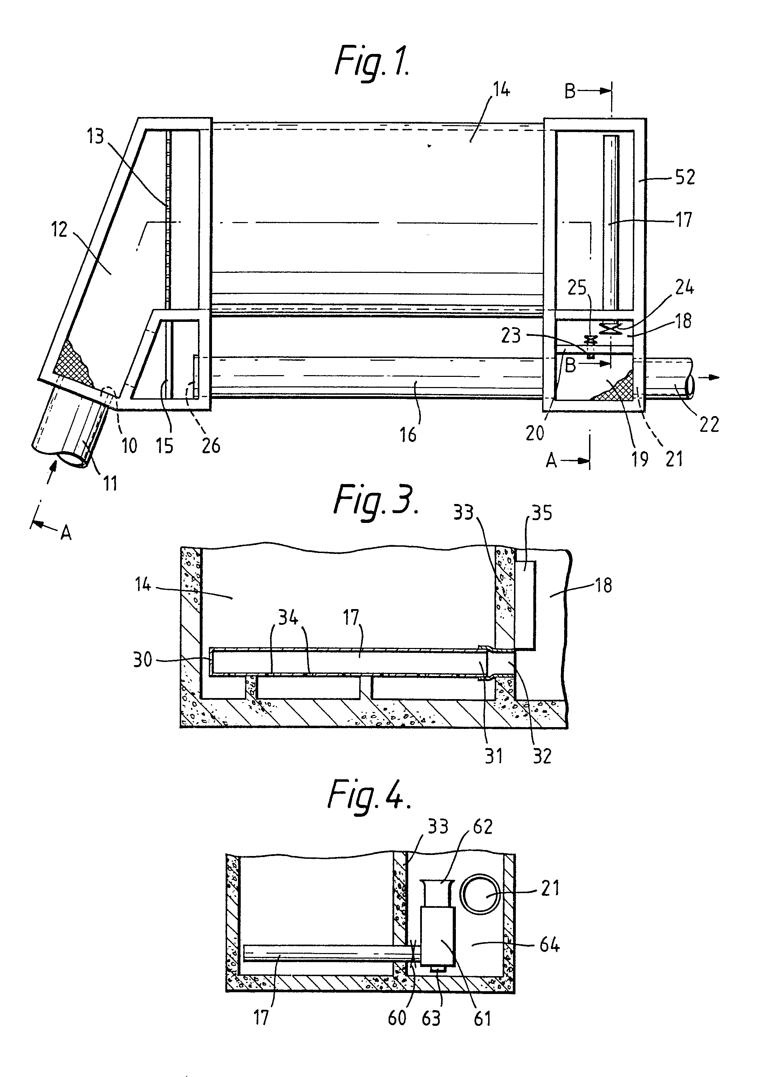

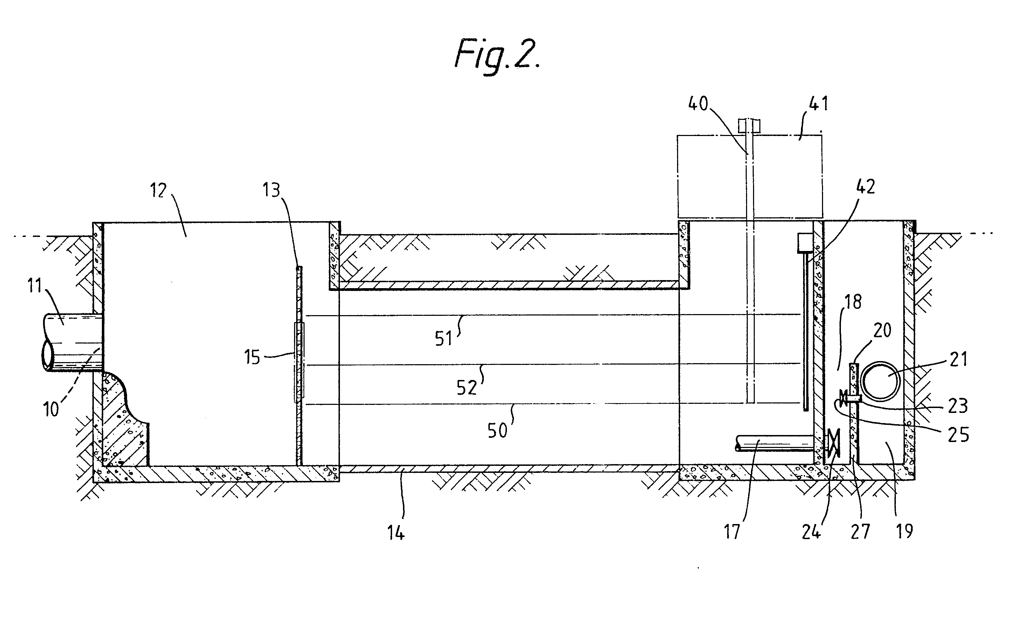

An oil separator according to the invention (Figs 1 and 2) has an inlet 10 connecting an inlet pipe 11 to an inlet chamber 12. The inlet chamber 12 is connected through a slotted baffle 13 to a separation chamber 14, and by a bypass weir 15, which extends to a height just below the top level of the inlet pipe 11, to a bypass pipe 16. At an end of the separation chamber 14 opposite to the baffle 13 is a throttle device in the form of a cylindrical manifold outlet pipe 17 leading to a plenum chamber 18. The plenum chamber 18 is separated from an outlet chamber 19 by an outlet weir 20 which rises to a height approximately level with the top of an outlet 21 which is connected to an outlet pipe 22. The plenum chamber 18 and outlet chamber 19 are interconnected by an orifice 23 through a dividing wall 27 and the bypass pipe 16 is connected directly to the outlet chamber 19. Valve means 24, 25 and 26 respectively enable the outlet from the throttle pipe 17, the orifice 23 and the entry to the bypass pipe 16 to be sealed.

The manifold outlet pipe 17 (Fig 3) consists of a cylindrical pipe extending substantially the width of the separation chamber 14 close to the bottom of the separation chamber at the end remote from the inlet 10. The cylinder is hollow and is closed at one end 30 and connected at the other end 31 to an orifice 32 in a side wall 33 of the separation chamber 14, the orifice 32 leading into the plenum chamber 18. A number of downwardly directed perforations 34 in the outlet pipe 17 connect the separation chamber 14 and hollow interior of the pipe 17. Valve means in the form of a penstock 35 are positioned adjacent to the orifice 32.

Oil removal means, shown generally at 40 in Fig 2, are positioned adjacent to the end of the separation chamber 14 remote from the inlet 10 and lead to a collection tank 41. Also positioned at this end is an oil level indicator 42 connected to a control box (not shown).

In use the oil separator is positioned in a water drainage system. There will normally be water in the separator, the top level of the water when there is no flow through the system being at a datum level 50 corresponding to the level of the bottom of the outlet 21. When there is precipitation over the catchment area of the water drainage system water plus entrained impurities will eventually arrive through the inlet pipe 11 to the inlet 10. The flow will pass through the baffle 13 to the separation chamber 14 and the water level will rise to a level, as indicated at 51 in Fig 2, determined by the throttling effect of the outlets 17, 23 and by the rate of flow. In this way the separator makes maximum use of the head available. During passage through the separation chamber 14 any globules of oil will rise to the surface 51 to be removed therefrom by the oil removal means 40. Should the flow through the inlet pipe 11 be so great that the water level in the inlet chamber 12 reaches the level of the bypass weir 15 a proportion of the incoming water will start to flow over the weir 15 and through the bypass pipe 16 directly to the outlet chamber 19 and hence through the outlet 21 to the outlet pipe 22. However it will be realised that by the time this stage is reached substantially all contaminating oil will have been washed from the catchment area and will have collected in the separation chamber. Should the oil removal apparatus 40 fail to function efficiently the oil level detection device 42 will operate at a preset oil level to operate a warning through the control box (not shown).

The separator may be operated with the valve 25 closed so that the normal minimum water level in the separation chamber is at an intermediate level 52, this being the height of the outlet weir 20.

In an alternative arrangement of the throttle system (Figure 4) the throttle device, again in the form of a cylindrical manifold outlet pipe 17, leads via a valve 60 to a cylindrical plenum chamber 61 having a weir in the form of a bellmouth outlet 62 and an orifice 63 leading to an outlet chamber 64.

The inlet 10 and outlet 21 have been illustrated as being at different levels, with the top of the outlet substantially level with the bottom of the inlet. This is consistent with API separator practice, but is not necessary for separators according to the present invention which will operate satisfactorily with inlet 10 and outlet 21 at the same level.

The oil separator may advantageously be formed from concrete which may be constructed in situ, or may be constructed from prefabricated units of suitable material. For small catchment areas, where only small separators are required, cylindrical, rather than rectangular as illustrated, separators may be suitable.

The construction and physical details of the oil separator according to the invention are similar to those of the API type of separator which is well known in the art, and therefore requires no description herein. Likewise oil removal apparatus is well known by those skilled in the art and requires no further description. It will be realised that the oil separator is preferably actuated automatically, in either a continuous or intermittent mode. Sensing devices are well known in the art and need no description herein.

The separator described will normally operate for periods of months at a time unattended, other than for emptying the oil separator 41 when full. Should there be a major spillage and an excessive amount of oil build up in the separation chamber 14 the chamber can be sealed off using the valve means 24 and 26 to allow containment without danger of contaminating oil reaching the outlet pipe 22. The oil separator will need routine maintenance from time to time, and this will take place in periods of non-precipitation. Access to the various chambers of the separator will be necessary through, for example, removable flooring panels. Such details are well known from previous use on, for example, chambers of sewage treatment works and hence are not described in detail herein.

It will be realised that, due to the throttling effect on the outlet from the separation chamber 14 and the increased height 51 of the water level therein during operation, the overall size of the separation chamber 14, and therefore of the oil separator as a whole, can be much reduced relative to devices designed to operate at substantially the standing water level. Cost and land usage can therefore be expected to be considerably reduced.

## Claims

1. An oil separator, for use in a water drainage system, having an inlet leading to an inlet chamber which leads to a separation chamber and in which there is also a bypass weir, the separation chamber being connected by a throttle system to an outlet chamber from which there is an outlet, the throttle system intaking water from below a datum water level such that, in use, when water is flowing through the separator the water level rises to a level determined by the throttle system and by the rate of flow and such that should the rate and duration of flow cause the water to rise above a predetermined level excess inflow to the inlet chamber can pass over the bypass weir directly to a bypass.

2. An oil separator as claimed in Claim 1 including a baffle between the inlet chamber and the separation chamber.

3. An oil separator as claimed in Claim 2 wherein the baffle is slotted.

4. An oil separator as claimed in any one of Claims 1 to 3 wherein there is a plenum chamber between the separation chamber and the outlet chamber.

5. An oil separator as claimed in Claim 4 wherein the plenum chamber is separated from the outlet chamber by a dividing wall having a weir and an orifice, the orifice connecting the plenum chamber to the outlet chamber.

6. An oil separator as claimed in Claim 5 wherein the orifice can be closed by a valve.

7. An oil separator as claimed in any one of Claims 1 to 6 including a throttle device in the form of a cylindrical pipe extending substantially the width of the separation chamber, and having therein a plurality of perforations.

8. An oil separator as claimed in Claim 7 wherein the perforations are downwardly directed.

9. An oil separator as claimed in any one of Claims 1 to 8 wherein the bypass leads from the inlet chamber to the outlet chamber.

10. An oil separator as claimed in any one of Claims 1 to 9 wherein the bypass can be closed.

11. An oil separator as claimed in any one of Claims 1 to 10 wherein the separation chamber can be sealed from the outlet chamber.

12. An oil separator substantially as described herein with reference to Figures 1 to 4 of the accompanying drawings.

*Fig.1.*

*Fig.3.*

*Fig.4.*

Fig.2.